# EUROPEAN PATENT APPLICATION

(11) **EP 4 691 692 A1**
(43) Date of publication of application: **11.02.2026**
(21) Application number: 25192809.9
(22) Date of filing: 30.07.2025
(51) Int. Cl.: B23Q 11/00, B22F 5/10, B22F 10/66, B22F 10/68, B08B 5/04, B08B 7/00, B08B 9/032, B23B 47/34, B29C 64/35, B33Y 40/20, B22F 5/00, B22F 5/04, B22F 10/28, B08B 5/02, B29C 64/153

(54) **FLUID FLUSHING SYSTEMS FOR FOREIGN OBJECT DEBRIS AMELIORATION, AND METHODS AND DEVICES RELATED THERETO**

(30) Priority: 31.07.2024 US 202418791284
(71) Applicant: Relativity Space, Inc., Long Beach, CA 90807 (US)
(72) Inventor: NGO, Christopher, Long Beach, 90807 (US); PALMER, Jeremy, Long Beach, 90807 (US)
(74) Representative: EIP

(57) **Abstract**

Methods, apparatus, and devices for fluid flushing systems to remove foreign object debris (FOD) are provided. These methods and devices are designed to flush and transport FOD away from machined parts. Foreign object debris refers to any unintended material such as tiny particles, chips that enters a part during a manufacturing process. FOD can have significant effects, compromising the quality and functionality of manufactured items. This can lead to costly consequences such as rework, scrapped parts, and production delays. FOD prevention is essential for improving safety, reliability, and efficiency.

## Description

### FIELD OF THE INVENTION

This invention is generally related to preventing Foreign Object Debris (FOD) in a part-finishing operation. In particular, it is related to fluid flushing systems for transporting FOD away from a machined part and devices and methods thereof.

### BACKGROUND

Additive manufacturing is a process by which a product or part is manufactured by adding one layer of material on top of another in a sequence or pattern that results in a solid part being built. This method of manufacturing is commonly referred to as three-dimensional or 3-D printing and can be done with different materials, including plastic and metal. There are many different processes available for implementing 3-D printing of articles, including, among others, direct energy deposition, wire arc additive manufacturing, powder bed fusion, cold spray, etc.

Additive manufacturing has enabled the production of intricate parts with complex internal structures. Unlike traditional subtractive methods, additive manufacturing allows for the creation of hidden channels, cooling passages, and fluid conduits that would be challenging or impossible to achieve otherwise.

Foreign Object Debris (FOD) refers to any material that doesn't belong in the manufacturing process and can cause problems if left unremoved. In the context of clogging internal channels, FOD could include various objects, that find their way into the channels during maintenance or manufacturing processes. For example, in an engine with intricate passages, if a small piece of debris like a metal chip enters these channels, it can obstruct the flow of coolant, fluid, or air, leading to reduced efficiency. This, in turn, may cause overheating, component damage, or even engine failure.

### SUMMARY OF THE INVENTION

Aspects of the disclosure are directed to methods and devices for fluid flushing and transporting FOD away from a machined part.

Still further aspects of the disclosure are directed to a method for preventing Foreign Object Debris (FOD) in a part finishing operation comprising, connecting a part comprising at least one internal channel to a fluid pump such that the fluid pump is in fluid communication with the at least one internal channel; operating the pump to pressurize the part with a fluid; breaching the internal channel with a machining device to form an opening in the internal channel; pumping the fluid through the internal channel and the opening to produce a fluid current.

In still further aspects of the disclosure, the fluid is a coolant from the machining device.

In still further aspects of the disclosure, the part is additively manufactured.

In still further aspects of the disclosure, the method further comprises an adapter coupled to the part and in fluid communication between the fluid pump and the internal channel.

In still further aspects of the disclosure, the method further comprises a fluid reservoir in fluid communication with the fluid pump.

In still further aspects of the disclosure, the machining device further comprises a coolant system, and the coolant system is in fluid communication with the fluid pump.

In still further aspects of the disclosure, pumping the fluid through the internal channel and the opening, further provides cooling to the machining device.

In still further aspects of the disclosure, pumping the fluid through the internal channel and the opening provides sufficient cooling for a machining operation of the machining device.

In still further aspects of the disclosure, the fluid passing through the opening is recirculated through the pump and the part.

In still further aspects of the disclosure, the method further comprises a filter in fluid communication between the fluid pump and the part such that recirculating fluid passes through the filter.

In still further aspects of the disclosure, the adapter is additively manufactured on the part.

In still further aspects of the disclosure, the method further comprises a manifold in fluid communication with the fluid pump, and wherein the at least one internal channel is a plurality of internal channels, and each of the plurality of channels is in fluid communication with the manifold.

In still further aspects of the disclosure, the manifold is additively manufactured on the part.

In still further aspects of the disclosure, the method further comprises a valve in fluid communication with the fluid pump.

In still further aspects of the disclosure, the method further comprises actuating the valve to regulate the fluid current.

Several aspects of the disclosure are directed to an apparatus for preventing Foreign Object Debris (FOD) in a part finishing operation comprising, a machining device, a part, a fluid, and a fluid pump; the part comprises at least one internal channel; the fluid pump is in fluid communication with the at least one internal channel and is configured to pump the fluid into the at least one internal channel, and pressurize the part with the fluid; the machining device is configured to remove material from the part and breach the internal channel to form an opening; the fluid pump is further configured to circulate the fluid through the internal channel and the opening; and the fluid is configured to transport FOD.

In still further aspects of the disclosure, the apparatus further comprises a coolant for the machining device.

In still further aspects of the disclosure, the apparatus further comprises that the part is additively manufactured.

In still further aspects of the disclosure, the apparatus further comprises an adapter coupled to the part and in fluid communication between the fluid pump and the internal channel.

In still further aspects of the disclosure, the apparatus further comprises a fluid reservoir in fluid communication with the fluid pump.

In still further aspects of the disclosure, the apparatus further comprises that the machining device further comprises a coolant system, and the coolant system is in fluid communication with the fluid pump.

In still further aspects of the disclosure, the apparatus further comprises that the fluid is further configured to cool to the machining device.

In still further aspects of the disclosure, the apparatus further comprises that the fluid is recirculated through the pump, the opening, and the part.

In still further aspects of the disclosure, the apparatus further comprises a filter in fluid communication with the fluid pump.

In still further aspects of the disclosure, the apparatus further comprises that the adapter is additively manufactured on the part.

In still further aspects of the disclosure, the apparatus further comprises a manifold in fluid communication with the fluid pump, and the at least one internal channel is a plurality of internal channels, and each of the plurality of channels is in fluid communication with the manifold.

In still further aspects of the disclosure, the apparatus further comprises that the manifold is additively manufactured on the part.

In still further aspects of the disclosure, the apparatus further comprises a valve in fluid communication with the fluid pump.

In still further aspects of the disclosure, the apparatus further comprises that the valve is configured to regulate fluid flow.

Various aspects of the disclosure, are directed to a device comprising, a cylindrical base with a central axis, a first end with an exit hole therewithin, and an exterior coaxial with the central axis and with an entrance hole therewithin; the entrance hole and the exit hole form a fluid path; a housing disposed about the cylindrical base with a cylindrical interior coaxial with the central axis, and an exterior with a through hole therewithin; a first bearing and a second bearing coaxial with the axis, the first and second bearings are disposed about the base, distal to the through hole and on opposing sides of the through hole; and the first and second bearings are coupled to the base and the housing and configured so that the housing can rotate about the base and form a fluid path such that the through hole and the exit hole are in fluid communication.

In still further aspects of the disclosure, the device further comprises a plurality of exit holes wherein each of the exit holes is in fluid communication with the fluid path formed by the first and second bearings.

In still further aspects of the disclosure, the device further comprises at least one coupling point disposed on the first end such that a part can be coupled to the first end.

In still further aspects of the disclosure, the device is further configured to couple to a fixture table of a machining device such that the machining device can manipulate the part.

In still further aspects of the disclosure, the device further comprises that the through hole is further configured to couple to a fluid source.

In still further aspects of the disclosure, the device further comprises that the exit hole is threaded.

In still further aspects of the disclosure, the device further comprises that the exit hole is in fluid communication with the part.

In still further aspects of the disclosure, the device is further configured to match a geometry of the fixture table.

In still further aspects of the disclosure, the device further comprises a device in fluid communication with the fluid pump, the device comprising: a cylindrical base with a central axis, a first end with an exit hole therewithin, and an exterior coaxial with the central axis and with an entrance hole therewithin; the entrance hole and the exit hole form a fluid path a housing disposed about the cylindrical base with a cylindrical interior coaxial with the central axis, and an exterior with a through hole therewithin; a first bearing and a second bearing coaxial with the axis, the first and second bearings are disposed about the base, distal to the through hole and on opposing sides of the through hole; and the first and second bearings are coupled to the base and the housing and configured so that the housing can rotate about the base and form a fluid path such that the through hole and the exit hole are in fluid communication.

In still further aspects of the disclosure, the apparatus further comprises a device in fluid communication with the fluid pump, the device comprising: a cylindrical base with a central axis, a first end with an exit hole therewithin, and an exterior coaxial with the central axis and with an entrance hole therewithin; the entrance hole and the exit hole form a fluid path a housing disposed about the cylindrical base with a cylindrical interior coaxial with the central axis, and an exterior with a through hole therewithin; a first bearing and a second bearing coaxial with the axis, the first and second bearings are disposed about the base, distal to the through hole and on opposing sides of the through hole; and the first and second bearings are coupled to the base and the housing and configured so that the housing can rotate about the base and form a fluid path such that the through hole and the exit hole are in fluid communication.

Additional embodiments and features are set forth in part in the description that follows, and in part will become apparent to those skilled in the art upon examination of the specification or may be learned by the practice of the disclosure. A further understanding of the nature and advantages of the present disclosure may be realized by reference to the remaining portions of the specification and the drawings, which forms a part of this disclosure.

### BRIEF DESCRIPTION OF THE DRAWINGS

The description will be more fully understood with reference to the following figures and data graphs, which include various embodiments of the disclosure and should not be construed as a complete recitation of the scope of the disclosure, wherein:
FIG. 1 illustrates an additive manufactured part with internal voids in accordance with aspects of the prior art.
FIG. 2 depicts a flow chart for an example method for preventing FOD in a part finishing operation in accordance with some embodiments.
FIG. 3 provides a schematic of a fluid flushing system for FOD amelioration in accordance with some embodiments.
FIG 4 depicts a part with internal channels pressurized with fluid in accordance with various embodiments.
FIG 5 depicts breaching a pressurized internal channel of a part in accordance with various embodiments.
FIG. 6A and FIG 6B provide schematics of a fluid flushing system for FOD amelioration and surrounding elements in accordance with some embodiments.
FIG. 7 depicts an exemplary rotating fluid distribution device coupled to a fixture table of a machining device in accordance with some embodiments.
FIG. 8A depicts an exemplary rotating fluid distribution device in accordance with some embodiments.
FIG. 8B and FIG. 8C illustrate components of a rotating fluid distribution device assembly in accordance with some embodiments.
FIG. 9A depicts a cross-section of a rotating fluid distribution device in accordance with some embodiments.
FIG. 9B illustrates a cross-section and fluid flow through a rotating fluid distribution device in accordance with some embodiments.

### DETAILED DESCRIPTION

It will be understood that the components of the embodiments, as generally described herein and illustrated in the appended figures, may be arranged and designed in a variety of different configurations. Thus, the following more detailed description of various embodiments, as represented in the figures, is not intended to limit the scope of the present disclosure but is merely representative of various embodiments. While various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages and similar language throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment. Thus, the phrases "in one embodiment," "in an embodiment," and similar language throughout this specification may but do not necessarily, all refer to the same embodiment.

Foreign Object Debris (FOD) refers to various objects, substances, or particles that unintentionally enter areas where they pose a risk. These foreign entities, such as misplaced tools, loose hardware, or environmental debris, are not supposed to be there. FOD is a major concern in industries like aviation, aerospace, and automotive sectors due to its potential to cause serious issues.

In manufacturing environments, FOD can contaminate production lines, leading to product defects and damage to machinery. For example, in complex engine passages, even a small piece of debris like a metal chip can obstruct the flow of coolant, fluid, or air, causing reduced efficiency, overheating, component damage, or engine failure. Preventing FOD is crucial, and implementing effective strategies and equipment to remove FOD can consequently lead to improvements in many industries' quality and safety of their products and manufacturing operations.

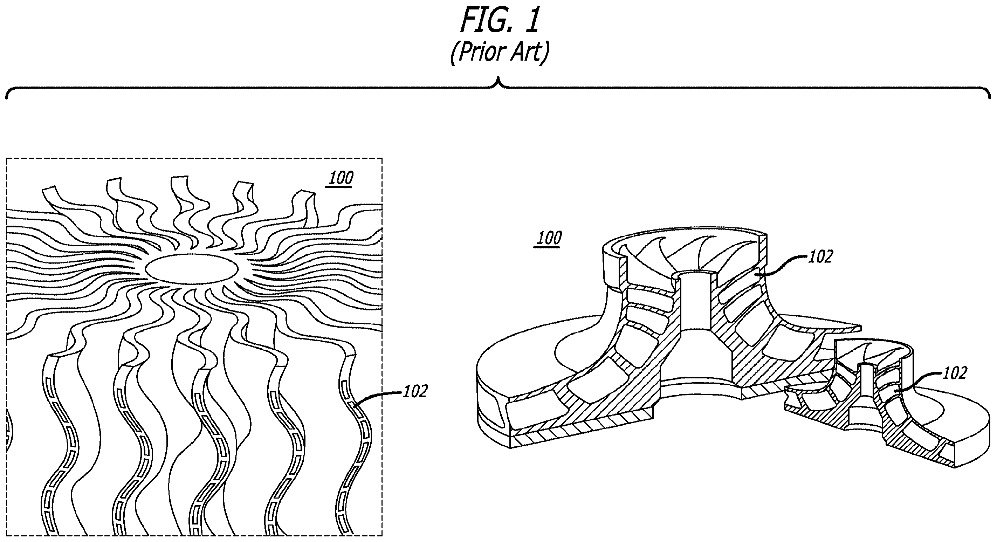

Additive manufacturing (AM) is a process by which a product or part is manufactured by adding one layer of material on top of another in a sequence or pattern that results in a solid part being built. AM has enabled the production of intricate parts with complex voids and internal structures. Unlike traditional subtractive methods, which start with a solid object and remove material to form a final product, AM allows for the creation of hidden channels, cooling passages, and fluid conduits that would be challenging or impossible to achieve otherwise. However, this innovation introduces a new set of challenges. Figure 1 illustrates prior art additively manufactured parts 100 with complex internal geometries and voids 102.

In AM, objects are built layer by layer, and voids can be designed into the object as part of the layering process. These voids can become traps for FOD. For example, having a preexisting void in an object can increase the likelihood of FOD entering the object during manufacturing processes, such as a metal chip being introduced during a breaching operation into the void and becoming stuck or embedded in the final product.

This is different from traditional subtractive manufacturing, where material is removed from a solid block to create the final object. In subtractive processes, the steps can be carefully sequenced and controlled to minimize the risk of chips or other debris becoming lodged in voids. Since the material is being removed, any debris generated can often be cleared away before it has a chance to become a problem.

The use of coolants and lubricants in subtractive manufacturing can help flush away debris and further reduce the risk of FOD. However, when subtractive manufacturing is utilized to finish an AM part, FOD management can become even more complex. Methods meant to control FOD, such as coolant flooding, can instead result in flushing chips FOD into the AM part, increasing rather than decreasing the likelihood of FOD egress.

Numerous methods are employed to prevent the intrusion of FOD, such as the metal chips produced by a milling machine into the critical voids and cavities during milling, finishing, and breaching operations. One common technique involves strategically inserting a malleable substance, such as plastic or wax, into the internal cavities and voids prior to machining. This preemptive measure serves as a barrier, effectively repelling the invasive metal chips generated during the milling process. Upon the completion of machining, the protective material is carefully extracted. In the case of wax, a gentle heating process is sufficient to melt and remove it, whereas plastic may require a solvent to dissolve away the filler material.

While such methods are often effective, they undermine the motivation to utilize additive manufacturing for streamlined efficiencies. Additive manufacturing is often utilized because the manufacturing technique eliminates the need for many such post-processing measures. For example, dissolving filler material (cores) is a common processing step for casting processes. Casting processes frequently utilize cores, typically made of sand or soluble materials, to create internal cavities within the cast part. After the metal has solidified, these cores are dissolved away, often with water or chemical agents. This method is integral to achieving complex internal geometries that would be impossible to machine otherwise. In contrast, additive manufacturing can often produce those complex internal geometries layer by layer without the need for a core. The dissolving of filler material, whether plastic fillers or the removal of casting cores, requires increased labor, extending the production timeline, impacting the overall efficiency of the manufacturing process, and escalating costs. Additionally, while the filler material may reduce the risk of FOD from the machining process, it introduces a new FOD consideration in the form of incomplete removal of the filler material.

### Embodiments

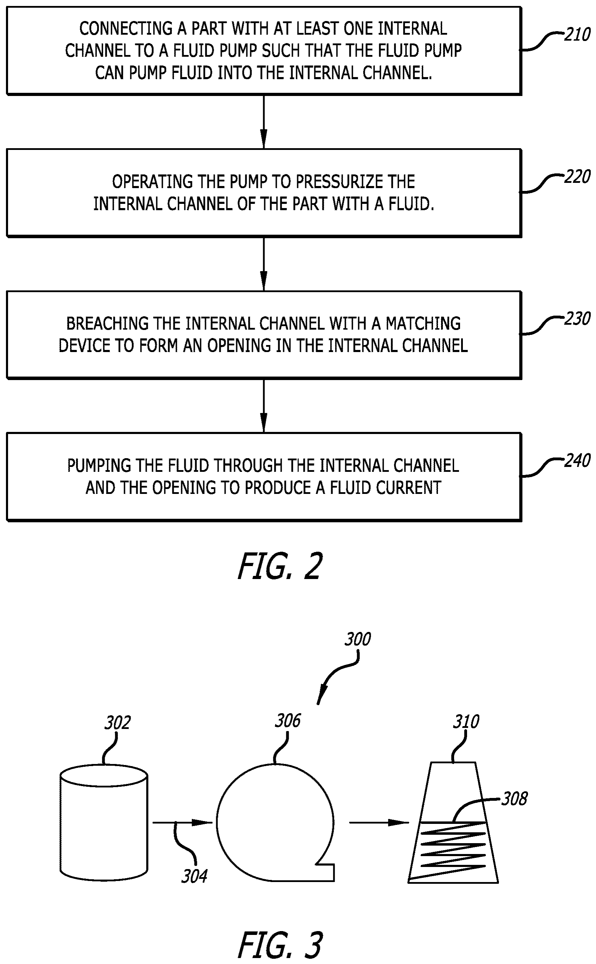

FIG. 2 depicts a flow chart for an example method for preventing FOD in a part finishing operation in accordance with the disclosure.

At step 210, a part with an internal channel is connected to a pump such that the pump can pump fluid into the internal channel of the part. At step 220, the pump pumps a fluid into the internal channel of the part, pressurizing the part and internal channel with the fluid. At step 230, a machining device breaches the internal channel of the part, removing material and forming an opening in the part and internal channel. At step 240, the pump pumps the fluid through the internal channel, and the opening produces a fluid current through the part. The fluid current can flush away debris and reduce the risk of FOD.

Fig 3 illustrates an open flushing system 300. In many such embodiments, a fluid source 302 provides a fluid 304 configured to flush away debris, which can reduce the risk of FOD. In some embodiments, the fluid 304 is selected based on its density and viscosity, such that it is optimized to transport debris. A fluid pump 306 pumps the fluid 304 into an internal channel 308 of a part 310, pressurizing the internal channel 308 with the fluid 304. The pressurized internal channel 308 is breached removing material to form an opening. The pressurized fluid 304 flows through the opening, creating a fluid current that can flush away debris and reduce the risk of FOD. The pump 306 can then circulate the fluid 304 through the opening to flush away debris. In some embodiments, the fluid 304 is selected based on its interaction with the part 310. In some such embodiments, the fluid 304 is selected to prevent reactions or for anti-corrosion properties. In other embodiments, the fluid 304 is selected to encourage desirable reactions with the part 310 such as the formation of protective coatings

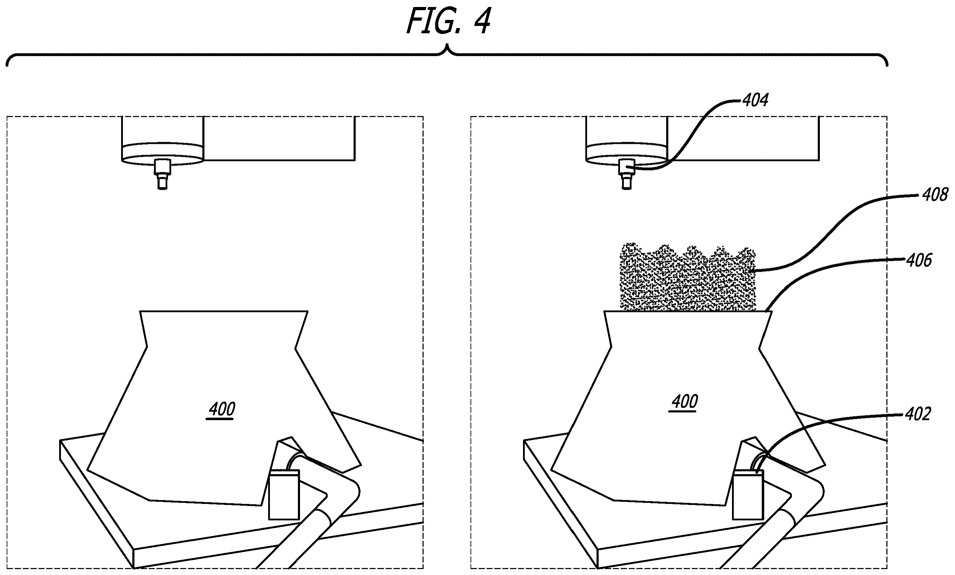

Fig. 4 depicts an exemplary part with pressurized internal channels 400. An adapter 402 connects the part 400 to the fluid pump (not shown) and pressurizes the internal channels of the part. In some embodiments, the adapter is additively manufactured on the part 400, or subtractively manufactured from material additively manufactured on the part 400. A machining device 404 then creates an opening 406 in the part 400, and the fluid 408 is pumped through the opening 406 in part to flush away debris.

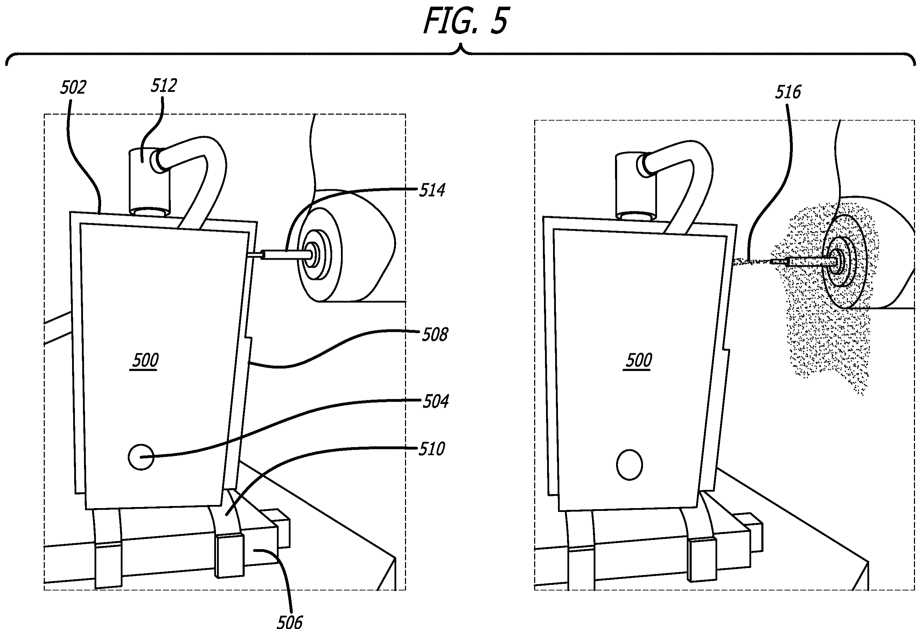

FIG 5 depicts breaching a pressurized internal channel of a part in accordance with an exemplary embodiment. In order to pressurize a part 500, openings, passageways, and other points of egress are blocked with caps 502, plugs 504, and sealing the part 500 against surfaces such as fixture tables 506. In many such embodiments, straps 508 and clamps 510 are utilized to maintain the seals against the pressure of the system. In some such embodiments, the caps 502 and plugs 504 can be fitted with an adapter 512 to connect the part 500 to a pump so that the pump can pressurize the internal channels and voids of the part with fluid. Once part 500 is pressurized with fluid, a machining device 514 can form an opening in the part, breaching the internal channels. Breaching the internal channels allows the pressurized fluid 516 to erupt through the newly formed opening and flush away debris. In some such embodiments, the fluid current 516 provides cooling for the machining device to perform machining operations.

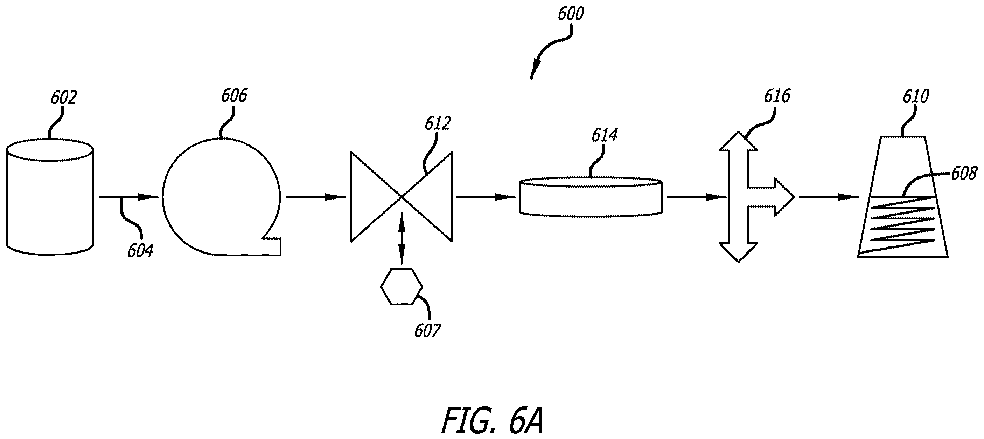

Some embodiments, such as the flush system 600 illustrated in Figure 6A, utilize a manifold 616 so that the pump 606 can pump fluid 604 through multiple internal channels 608 and voids in the part 610. In some embodiments, the manifold 616 is used in addition to or as a replacement for caps 502 and plugs 504 (shown in FIG 5.). In some embodiments, the manifold 616 is additively manufactured on the part 610. In some embodiments where the machining operation requires cooling, prior to breaching, the machining device provides its own coolant, but once the part is breached, the machining device stops utilizing its own coolant and instead relies on the fluid current from the part opening for cooling. In some embodiments a reduction in pressure inside the internal channels 608 that result from breaching signals for the machining device to reduce its coolant and for the flush system to provide sufficient flow for the machining device. Such reduction in pressure can be sensed by sensor 607 shown attached to the valve 612, although sensor 607 can sense pressure at other locations where fluid 604 is pressurized. In some embodiments, the fluid current rate is determined by varying the pumping speed of the pump 606. Other embodiments utilize valves 612 to restrict the fluid current flow. Yet other embodiments utilized both valves 612 and pumps 606 to achieve flow control. In many embodiments, a rotating fluid distribution device 614 is used in the flush system 600. The rotating fluid distribution device 614 is in fluid communication with the pump 606 and the internal channels 608 of the part 610.

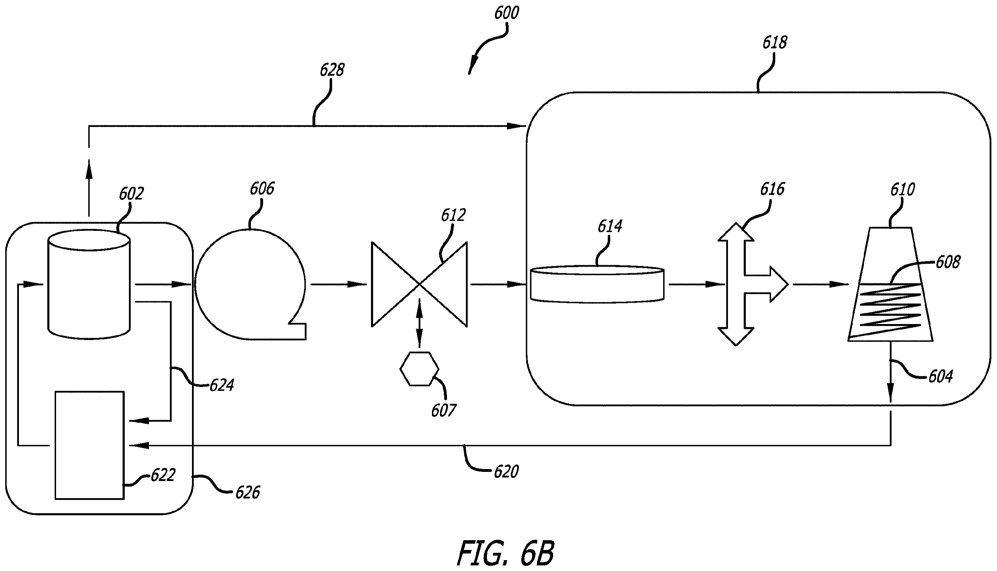

In some embodiments, such as the flush system 600 illustrated in Figure 6B, the fluid 604 is captured, such as from inside a machining device enclosure 618, and recirculated 620. In many such embodiments, the flushing system includes a filter 622 to remove flushed material from the fluid 604 and prevent the material from being circulated and introduced into the part 610. In some embodiments, the system also utilizes a storage tank as a fluid source 602 to store the fluid 604. In many embodiments, the storage tank 602 is connected to the filter 622 such that the fluid in the tank 602 can be recirculated 624 through the filter 622 and tank 602 to continuously remove debris. In some embodiments, the fluid selected is the machining device coolant. In some such embodiments, the machining device and the flushing system are interconnected. In some such embodiments, the machining device coolant system 626, such as its sump 602 and filters 622, are shared between both the flush system 600 and the machining device. In some embodiments, the machining device and flush system form one continuous fluid path. In other embodiments, each system has a separate isolated or isolatable fluid path 628.

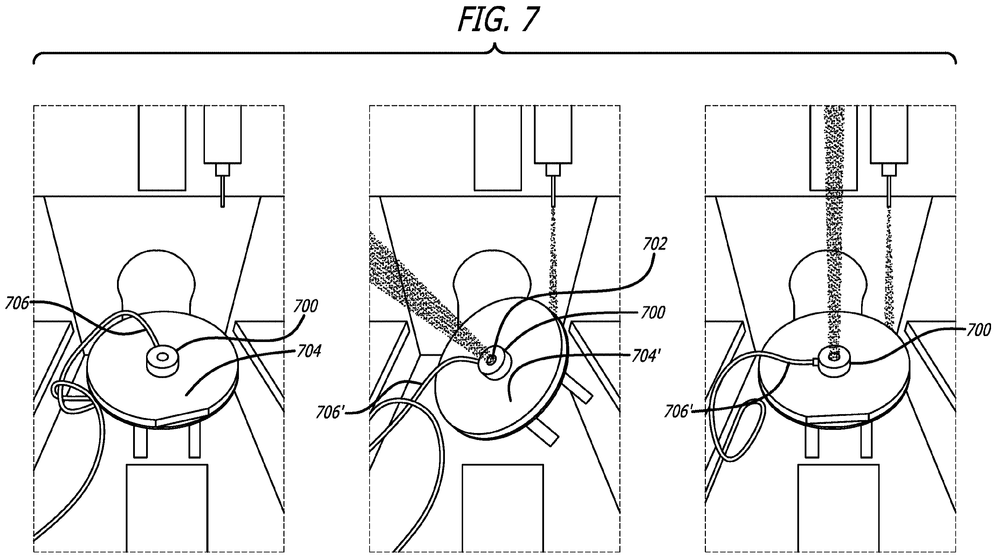

FIG. 7 depicts an exemplary rotating fluid distribution device 700 coupled to a fixture table 704 of a machining device in accordance with some embodiments. The rotating fluid distribution device 700 allows for a fluid path 702 to the part regardless of the orientation of part and fixture table 704', enabling the machining device to manipulate the part and table orientation 704' without kinking or tangling fluid supply lines 706 and disrupting fluid communication between the fluid sources 602 and the part 614. The supply lines 706 connect to the rotating fluid distribution device 700 outer housing. The outer housing can freely rotate along with the supply line 706', and the supply line can provide fluid regardless of the table 704' orientation.

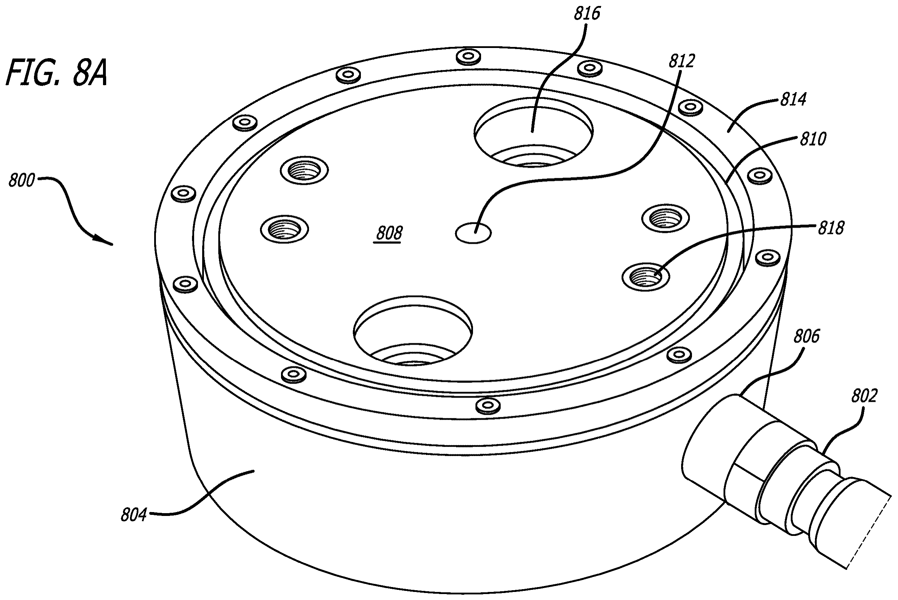

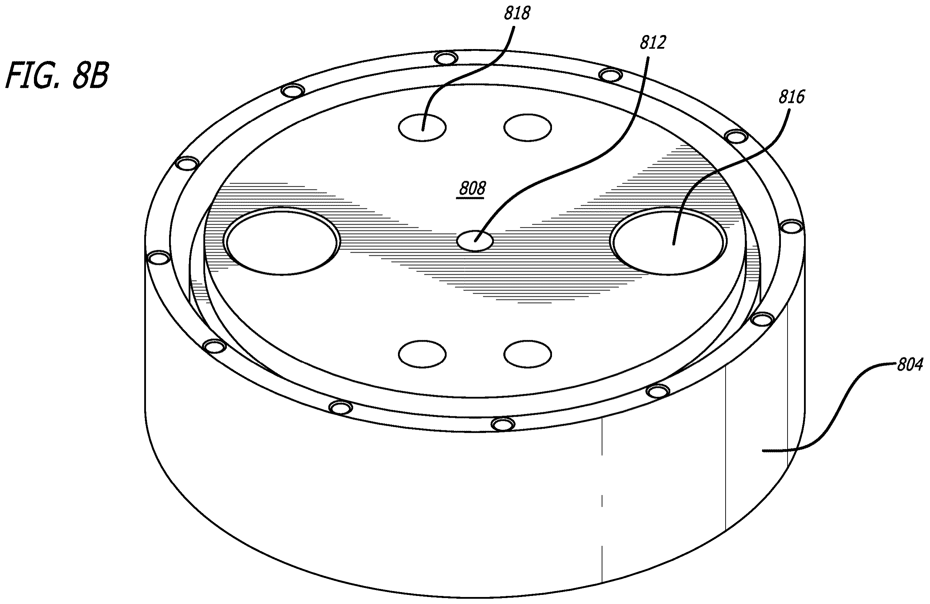

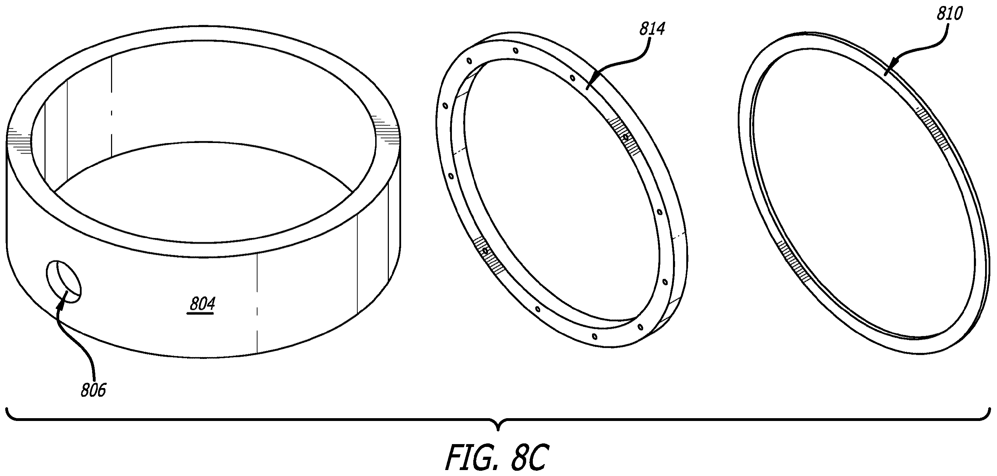

FIG. 8A, FIG 8B and FIG 8C depict an exemplary rotating fluid distribution device 800 in accordance with some embodiments. The rotating fluid distribution device 800 allows for a fluid path to the part 610 regardless of the part 610 orientation, enabling the manipulation of the part 610 without kinking or tangling fluid supply lines 802 and disrupting fluid communication between the fluid sources 602 and the part 614. The supply lines 802 connect to the rotating fluid distribution device 800 outer housing 804. In many embodiments, the supply line 802 connects to housing 804 at an opening port 806 that passes through the housing. In many such embodiments, the opening 806 is threaded for the connection of the supply line 802 of connection fittings. The outer housing 804 can freely rotate along with the supply line 802, about a base 808. The base 808 and housing are separated by bearings 810 that allow for rotation and form a gap and fluid path between the base 808 and housing 806. The base 808 has an entrance hole exposed to the gap, and the fluid path formed with the bearings 810 and housing 804 and an exterior exit hole 812 creates a fluid path from the opening 806 to the exit hole 812 regardless of the orientation of the housing 804 and supply line 802 relative to the base 808. In many embodiments, a housing cap 814 secures the bearings 810 between the base 808 and the housing 806, forming a seal for the fluid path. In many embodiments the base 808 contains through holes 816 that can be utilized to couple the rotating fluid distribution device 800 another object such as a part 610 or fixture table 704. In several embodiments, the base has coupling points 818, such as threaded holes such that objects and devices such as parts 610, clamps 510, and other fixtures can be coupled to the rotating fluid distribution device 800. In some embodiments, the rotating fluid distribution device 800 is sized to cover and affix to a machining device fixture table or supplement or replace the fixture table.

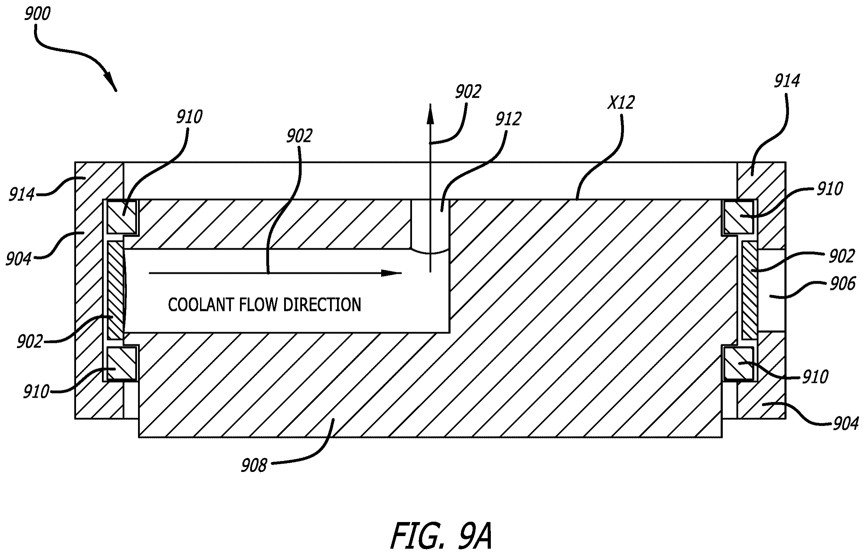

FIG. 9A depicts a cross-section of a rotating fluid distribution device 900 in accordance with some embodiments. The rotating fluid distribution device 900 allows for a fluid path 902 to the part regardless of orientation. A fluid supply connects to the rotating fluid distribution device 900 outer housing 904. In many embodiments, the supply line connects to housing 904 at an opening port 906 that passes through the housing 904. In many such embodiments, the opening 906 is threaded. The outer housing 904 can freely rotate, about a base 908. The base 908 and housing 904 are separated by bearings 910 that allow for rotation and form a gap 920 and fluid path 902 between the base 908 and housing 906. The base 908 has an entrance hole 922 exposed to the gap, and the fluid path 902 formed with the bearings 910 and housing 904 and an exit hole 912 creates a fluid path 902 from the opening 906 to the exit hole 812 regardless of the orientation of the housing 904 relative to the base 908. In many embodiments, a housing cap 914 secures the bearings 910 between the base 908 and the housing 906, forming a seal for the fluid path 902.

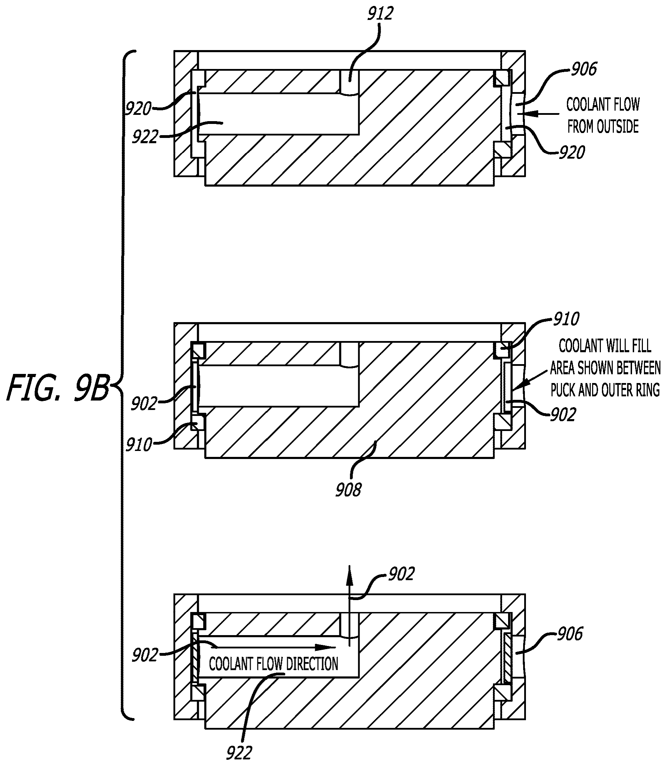

FIG. 9B illustrates a cross-section and fluid flow 902 through a rotating fluid distribution device 900 in accordance with some embodiments. In many embodiments, the fluid enters the rotating fluid distribution device 900 through a hole 906 in the housing 904 of the rotating fluid distribution device 900. Housing 904 and base 908 are separated by bearings 910 that form a gap 920, and fluid flows through this gap 920 between base 908 and housing 906 and into an entrance hole 922 in the base 908 exposed to the gap 920. The fluid then flows to an exit hole 912 in the base 908 and exits the rotating fluid distribution device 900.

Although specific embodiments of the invention have been described and illustrated, the invention is not to be limited to the specific forms or arrangements of parts so described and illustrated. The scope of the invention is to be defined by the claims appended hereto and their equivalents.

Although the operations of the method(s) herein are shown and described in a particular order, the order of the operations of each method may be altered so that certain operations may be performed in an inverse order or so that certain operations may be performed, at least in part, concurrently with other operations. Instructions or sub-operations of distinct operations may be implemented in an intermittent and/or alternating manner.

It should also be noted that at least some of the operations for the methods described herein may be implemented using software instructions stored on a computer usable storage medium for execution by a computer. As an example, an embodiment of a computer program product includes a computer usable storage medium to store a computer readable program.

The computer-usable or computer-readable storage medium can be an electronic, magnetic, optical, electromagnetic, infrared, or semiconductor system (or apparatus or device). Examples of non-transitory computer-usable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

### Example Clauses

Examples are set out in the following clauses:
1. A method for preventing foreign object debris in a part finishing operation, comprising:
   connecting a part comprising at least one internal channel to a fluid pump such that the fluid pump is in fluid communication with the at least one internal channel;
   operating the pump to pressurize the part with a fluid;
   breaching the internal channel with a machining device to form an opening in the internal channel; and
   pumping the fluid through the internal channel and the opening to produce a fluid current that exits the part.
2. The method of clause 1, wherein the fluid is a coolant from the machining device.
3. The method of clause 1 or 2, wherein the part is additively manufactured.
4. The method of any preceding clause, wherein the internal channel and the fluid pump are in fluid communication with an adapter coupled to the part.
5. The method of any preceding clause, wherein the fluid pump is in fluid communication with a fluid reservoir.
6. The method of any preceding clause, wherein the fluid pump is in fluid communication with a coolant system of the machining device.
7. The method of clause 6, wherein pumping the fluid through the internal channel and the opening, provides cooling to the machining device.
8. The method of clause 7, wherein pumping the fluid through the internal channel and the opening provides sufficient cooling for a machining operation of the machining device.
9. The method of any preceding clause, wherein the fluid passing through the opening is recirculated through the pump and the part.
10. The method of any preceding clause, wherein the part and the fluid pump are in fluid communication with a filter and recirculating fluid passes through the filter.
11. The method of any preceding clause when appendant to clause 4, wherein the adapter is additively manufactured on the part.
12. The method of any preceding clause, further comprising a manifold in fluid communication with the fluid pump, and wherein the at least one internal channel is a plurality of internal channels, and each of the plurality of channels is in fluid communication with the manifold.
13. The method of clause 12, wherein the manifold is additively manufactured on the part
14. The method of any preceding clause, wherein the fluid pump is in fluid communication with a valve.
15. The method of clause 14, wherein actuating the valve regulates the fluid current.
16. An apparatus for preventing foreign object debris in a part finishing operation, the apparatus comprising:
   a machining device, a fluid, and a fluid pump;
   wherein the machining device is configured to remove material from a part and breach an internal channel of the part to form an opening;
   wherein the fluid pump is in fluid communication with the internal channel and is configured to pump the fluid into the internal channel, and pressurize the part with the fluid;
   wherein the fluid pump is further configured to circulate the fluid through the internal channel and the opening; and
   wherein the fluid is configured to transport foreign object debris.
17. The apparatus of clause 16, wherein the fluid is a coolant for the machining device.
18. The apparatus of clause 16 or 17, wherein the part is additively manufactured.
19. The apparatus of any of clauses 16 to 18, further comprising an adapter coupled to the part and in fluid communication between the fluid pump and the internal channel.
20. The apparatus of any of clauses 16 to 19, further comprising a fluid reservoir in fluid communication with the fluid pump.
21. The apparatus of any of clauses 16 to 20, wherein the machining device further comprises a coolant system, and the coolant system is in fluid communication with the fluid pump.
22. The apparatus of clause 21, wherein the fluid is further configured to cool to the machining device.
23. The apparatus of any of clauses 16 to 22, wherein the fluid is recirculated through the pump, the opening, and the part.
24. The apparatus of any of clauses 16 to 23, further comprising a filter in fluid communication with the fluid pump.
25. The apparatus any of clauses 16 to 24 when appendant to clause 19, wherein the adapter additively manufactured on the part.
26. The apparatus of any of clauses 16 to 25, further comprising a manifold in fluid communication with the fluid pump, and wherein the at least one internal channel is a plurality of internal channels, and each of the plurality of channels is in fluid communication with the manifold.
27. The apparatus of clause 26, wherein the manifold is additively manufactured on the part
28. The apparatus of any of clauses 16 to 27, further comprising a valve in fluid communication with the fluid pump.
29. The apparatus of clause 28, wherein the valve is configured to regulate fluid flow.
30. A device comprising,
   a cylindrical base with a central axis, a first end with an exit hole therewithin, and an exterior coaxial with the central axis and with an entrance hole therewithin;
   wherein the entrance hole and the exit hole form a fluid path;
   a housing disposed about the cylindrical base with a cylindrical interior coaxial with the central axis, and an exterior with a through hole therewithin;
   a first bearing and a second bearing coaxial with the axis,
   wherein the first and second bearings are disposed about the base, distal to the through hole and on opposing sides of the through hole; and
   wherein the first and second bearings are coupled to the base and the housing and configured so that the housing can rotate about the base and form a fluid path such that the through hole and the exit hole are in fluid communication.
31. The device of clause 30, further comprising a plurality of exit holes wherein each of the exit holes is in fluid communication with the fluid path formed by the first and second bearings
32. The device of clause 30 or 31, further comprising at least one coupling point disposed on the first end such that a part can be coupled to the first end.
33. The device of clause 32 is further configured to couple to a fixture table of a machining device such that the machining device can manipulate the part.
34. The device of any of clauses 30 to 33, wherein the through hole is further configured to couple to a fluid source.
35. The device of clause 34, wherein the exit hole is threaded.
36. The device of clause 32, wherein the exit hole is in fluid communication with the part.
37. The device of clause 33, configured to match a geometry of the fixture table.
38. The method of any of clauses 1 to 15, further comprising a device in fluid communication with the fluid pump, the device comprising,
   a cylindrical base with a central axis, a first end with an exit hole therewithin, and an exterior coaxial with the central axis and with an entrance hole therewithin;
   wherein the entrance hole and the exit hole form a fluid path;
   a housing disposed about the cylindrical base with a cylindrical interior coaxial with the central axis, and an exterior with a through hole therewithin;
   a first bearing and a second bearing coaxial with the axis,
   wherein the first and second bearings are disposed about the base, distal to the through hole and on opposing sides of the through hole; and
   wherein the first and second bearings are coupled to the base and the housing and configured so that the housing can rotate about the base and form a fluid path such that the through hole and the exit hole are in fluid communication.
39. The apparatus of any of clauses 16 to 29, further comprising a device in fluid communication with the fluid pump, the device comprising,
   a cylindrical base with a central axis, a first end with an exit hole therewithin, and an exterior coaxial with the central axis and with an entrance hole therewithin;
   wherein the entrance hole and the exit hole form a fluid path;
   a housing disposed about the cylindrical base with a cylindrical interior coaxial with the central axis, and an exterior with a through hole therewithin;
   a first bearing and a second bearing coaxial with the axis,
   wherein the first and second bearings are disposed about the base, distal to the through hole and on opposing sides of the through hole; and
   wherein the first and second bearings are coupled to the base and the housing and configured so that the housing can rotate about the base and form a fluid path such that the through hole and the exit hole are in fluid communication.

## Claims

1. A method for preventing foreign object debris in a part finishing operation, comprising:
connecting a part comprising at least one internal channel to a fluid pump such that the fluid pump is in fluid communication with the at least one internal channel;
operating the pump to pressurize the part with a fluid;
breaching the internal channel with a machining device to form an opening in the internal channel; and
pumping the fluid through the internal channel and the opening to produce a fluid current that exits the part.

2. The method of claim 1, wherein the internal channel and the fluid pump are in fluid communication with an adapter coupled to the part, wherein the adapter is additively manufactured on the part.

3. The method of claims 1 or 2, wherein the fluid pump is in fluid communication with a coolant system of the machining device, and wherein optionally pumping the fluid through the internal channel and the opening, provides cooling to the machining device.

4. An apparatus for preventing foreign object debris in a part finishing operation, the apparatus comprising:
a machining device, a fluid, and a fluid pump;
wherein the machining device is configured to remove material from a part and breach an internal channel of the part to form an opening;
wherein the fluid pump is in fluid communication with the internal channel and is configured to pump the fluid into the internal channel, and pressurize the part with the fluid;
wherein the fluid pump is further configured to circulate the fluid through the internal channel and the opening; and
wherein the fluid is configured to transport foreign object debris.

5. The method or apparatus of any preceding claim, wherein the fluid is a coolant for the machining device.

6. The method or apparatus of any preceding claim, wherein the part is additively manufactured.

7. The apparatus of any of claims 4 to 6, further comprising an adapter coupled to the part and in fluid communication between the fluid pump and the internal channel, wherein the adapter is additively manufactured on the part.

8. The apparatus of any of claims 4 to 7, wherein the machining device further comprises a coolant system, and the coolant system is in fluid communication with the fluid pump and wherein optionally, the fluid is further configured to cool to the machining device.

9. The apparatus of any of claims 4 to 8, wherein the fluid is recirculated through the pump, the opening, and the part, and optionally further comprising a filter in fluid communication with the fluid pump.

10. The method or apparatus of any preceding claim, further comprising a manifold in fluid communication with the fluid pump, and wherein the at least one internal channel is a plurality of internal channels, and each of the plurality of channels is in fluid communication with the manifold, and wherein optionally the manifold is additively manufactured on the part.

11. The apparatus of any of claims 4 to 10, further comprising a valve in fluid communication with the fluid pump, wherein optionally the valve is configured to regulate fluid flow.

12. The method or apparatus of any preceding claim, further comprising a device in fluid communication with the fluid pump, the device comprising,
a cylindrical base with a central axis, a first end with an exit hole therewithin, and an exterior coaxial with the central axis and with an entrance hole therewithin;
wherein the entrance hole and the exit hole form a fluid path;
a housing disposed about the cylindrical base with a cylindrical interior coaxial with the central axis, and an exterior with a through hole therewithin;
a first bearing and a second bearing coaxial with the axis,
wherein the first and second bearings are disposed about the base, distal to the through hole and on opposing sides of the through hole; and
wherein the first and second bearings are coupled to the base and the housing and configured so that the housing can rotate about the base and form a fluid path such that the through hole and the exit hole are in fluid communication.

13. The method or apparatus of claim 12, further comprising a plurality of exit holes wherein each of the exit holes is in fluid communication with the fluid path formed by the first and second bearings.

14. The method or apparatus of claim 12 or 13, wherein the device further comprises at least one coupling point disposed on the first end such that a part can be coupled to the first end, wherein optionally the exit hole is in fluid communication with the part.

15. The method or apparatus of claim 14, wherein the device is further configured to couple to a fixture table of a machining device such that the machining device can manipulate the part, wherein optionally the device is configured to match a geometry of the fixture table.

16. The method or apparatus of any of claims 12 to 15, wherein the through hole is further configured to couple to a fluid source, and wherein optionally the exit hole is threaded.
